# EUROPEAN PATENT SPECIFICATION

(11) **EP 2 267 048 B1**
(45) Date of publication and mention of the grant of the patent: **12.10.2016**
(21) Application number: 09727032.6
(22) Date of filing: 26.03.2009
(51) Int. Cl.: C08F 220/22, C08F 220/54, C09K 3/18, D06M 15/277, C08F 220/24, C08F 220/56, C08F 220/58

(54) **FLUOROPOLYMER AND WATER-REPELLENT AND OIL-REPELLENT AGENT**
FLUORPOLYMER UND WASSER- UND ÖLABWEISENDES MITTEL
POLYMÈRE FLUORÉ ET AGENT HYDROPHOBE ET OLÉOPHOBE

(30) Priority: 31.03.2008 JP 2008089846
(43) Date of publication of application: 29.12.2010
(73) Proprietor: Daikin Industries, Ltd., Osaka 530-8323 (JP)
(72) Inventor: NAKAMURA, Hisako, Settsu-shi Osaka 566-8585 (JP); USUGAYA, Mitsuhiro, Osaka-shi Osaka 530-8323 (JP)
(74) Representative: Hoffmann Eitle
(86) International application number: PCT/JP2009/056087
(87) International publication number: WO 2009/123006

(56) References cited:
- JP-A- 1 056 711
- JP-A- 4 080 217
- JP-A- 4 080 218
- JP-A- 4 080 219
- JP-A- 9 221 618
- JP-A- 2003 228 164
- JP-A- 2005 146 102
- US-A1- 2002 096 286

## Description

### Technical Field

The present invention relates to a fluorine-containing polymer and a water- and oil-repellent agent having improved peel strength of a coating.

### Background Art

Since a fluorine-containing polymer has a low surface tension, it is widely used as a water- and oil-repellent agent. For example, US2002/0096286 A1, JP-A-50-003438 and JP-A-63-090588 disclose that the fluorine-containing polymer is used as the water- and oil-repellent agent. The fluorine-containing polymer, however, has a low adherence to a substrate. Conventional water- and oil-repellent agents have defects that, when a substrate treated with the water- and oil-repellent agent is coated with a urethane resin or an acrylic resin, the coating agent easily peels off or both of high water repellency (high water pressure resistance) and high coating peel strength are difficult.

### DISCLOSURE OF THE INVENTION

### Problems to be Solved by the Invention

An object of the present invention is to provide a fluorine-containing polymer having high water pressure resistance and improving peel strength of a coating.

### Means for Solving the Problems

The present invention provides a polymer, which is a fluorine-containing polymer comprising:
(a) a fluorine-containing monomer,
(b) an acrylamide monomer of the formula: 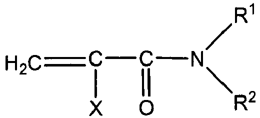 wherein
   X is H or methyl,
   R¹ is H, C₁₋₁₀-alkyl or C₁₋₁₀-alkoxyalkyl, and
   R² is C₁₋₁₀-alkyl or C₁₋₁₀-alkoxyalkyl, and
(c) a fluorine-free crosslinkable monomer having at least two reactive groups and/or carbon-carbon double bonds, wherein the reactive group is at least one selected from hydroxyl, epoxy, chloromethyl, blocked isocyanate, acetoacetoxy and carboxyl.

### Effects of the Invention

When the fluorine-containing polymer of the present invention is applied to a substrate, water pressure resistance (hydraulic pressure resistance) and peel strength of the coating are high. Durability of both the water pressure resistance and the coating peel strength is high, so that, for example, even if the substrate is washed, the water pressure resistance and the coating peel strength are not deteriorated.

### MODE OF CARRYING OUT THE INVENTION

The fluorine-containing monomer (a) is preferably a fluorine-containing acrylate.

The fluorine-containing acrylate ester is preferably a compound of the general formula:

CH₂=C(-X)-C(=O)-Y-Z-Rf (I)

wherein
- X: is H, linear or branched C₁₋₂₁-alkyl, F, Cl, Br, I, CFX¹X₂ (wherein X¹ and X² is H, F, Cl, Br or I), cyano, linear or branched C₁₋₂₁-fluoroalkyl, substituted or unsubstituted benzyl, or substituted or unsubstituted phenyl;
- Y: is -O- or -NH-;
- Z: is an aliphatic group having 1-10 carbon atoms, an aromatic or cycloaliphatic group having 6-18 carbon atoms, -CH₂CH₂N(R¹) SO₂- (in which R¹ is C₁₋₄-alkyl),-CH₂CH(OZ¹)CH₂- (in which Z¹ is H or acetyl), -(CH₂)ₘ-SO₂-(CH₂)ₙ- or -(CH₂)ₘ-S-(CH₂)ₙ- where m is 1-10 and n is 0-10; and
- Rf: is a linear or branched C₁₋₂₁-fluoroalkyl

In the fluorine-containing monomer (a), alpha-position (of acrylate or methacrylate) may be substituted with a group such as a halogen atom. Accordingly, in the formula (1), the X group may be linear or branched C₁₋₂₁-alkyl, F, Cl, Br, I, CFX¹X² (wherein X¹ and X² is H, F, Cl, Br or I), cyano, linear or branched C₁₋₂₁-fluoroalkyl, substituted or unsubstituted benzyl, or substituted or unsubstituted phenyl.

Preferred examples of the Z group include C₁₋₁₀-alkylene, namely -(CH₂)ₙ- wherein n is 1-10, preferably 1-4.

In formula (I), Rf is preferably a perfluoroalkyl group. The number of the carbon atoms in the Rf group may be 1-12, generally 1-10, for example, 1-8, particularly 1-6, especially 4-6. Examples of Rf include -CF₃, -CF₂CF₃, -CF₂CF₂CF₃, -CF(CF₃)₂, -CF₂CF₂CF₂CF₃, -CF₂CF(CF₃)₂, -C(CF₃)₃, -(CF₂)₄CF₃, -(CF₂)₂CF(CF₃)₂, -CF₂C(CF₃)₃, -CF(CF₃)CF₂CF₂CF₃, -(CF₂)₅CF₃, -(CF₂)₃CF(CF₃)₂, -(CF₂)₄CF(CF₃)₂, -(CF₂)₇CF₃, -(CF₂)₅CF(CF₃)₂, -(CF₂)₆CF(CF₃)₂ and -(CF₂)₉CF₃.

Specific examples of the component (a) are the following, to which the present invention is not limited. Therein, Rf is C₁₋₂₁-fluoroalkyl, particularly C₁₋₆-fluoroalkyl. The monomer (a) having a fluorine atom may be a mixture of at least two.
CH₂=C(-H)-C(=O)-O-(CH₂)₂-Rf
CH₂=C(-H)-C(=O)-O-C₆H₄-Rf
CH₂=C(-Cl)-C(=O)-O-(CH₂)₂-Rf
CH₂=C(-H)-C(=O)-O-(CH₂)₂N(-CH₃) SO₂-Rf
CH₂=C(-H)-C(=O)-O-(CH₂)₂N(-C₂H₅) SO₂-Rf
CH₂=C(-H)-C(=O)-O-CH₂CH(-OH) CH₂-Rf
CH₂=C(-H)-C(=O)-O-CH₂CH(-OCOCH₃) CH₂-Rf
CH₂=C(-H)-C(=O)-O-(CH₂)₂-S-Rf
CH₂=C(-H)-C(=O)-O-(CH₂)₂-S-(CH₂)₂-Rf
CH₂=C(-H)-C(=O)-O-(CH₂)₃-SO₂-Rf
CH₂=C(-H)-C(=O)-O-(CH₂)₂-SO₂-(CH₂)₂-Rf
CH₂=C(-H)-C(=O)-NH-(CH₂)₂-Rf
CH₂=C(-CH₃)-C(=O)-O-(CH₂)₂-S-Rf
CH₂=C(-CH₃)-C(=O)-O-(CH₂)₂-S-(CH₂)₂-Rf
CH₂=C(-CH₃)-C(=O)-O-(CH₂)₃-SO₂-Rf
CH₂=C(-CH₃)-C(=O)-O-(CH₂)₂-SO₂-(CH₂)₂-Rf
CH₂=C(-CH₃)-C(=O)-NH-(CH₂)₂-Rf
CH₂=C(-F)-C(=O)-O-(CH₂)₂-S-Rf
CH₂=C(-F)-C(=O)-O-(CH₂)₂-S-(CH₂)₂-Rf
CH₂=C(-F)-C(=O)-O-(CH₂)₂-SO₂-Rf
CH₂=C(-F)-C(=O)-O-(CH₂)₂-SO₂-(CH₂)₂-Rf
CH₂=C(-F)-C(=O)-NH-(CH₂)₂-Rf
CH₂=C(-Cl)-C(=O)-O-(CH₂)₂-S-Rf
CH₂=C(-Cl)-C(=O)-O-(CH₂)₂-S-(CH₂)₂-Rf
CH₂=C(-Cl)-C(=O)-O-(CH₂)₂-SO₂-Rf
CH₂=C(-Cl)-C(=O)-O-(CH₂)₂-SO₂-(CH₂)₂-Rf
CH₂=C(-Cl)-C(=O)-NH-(CH₂)₂-Rf
CH₂=C(-CF₃)-C(=O)-O-(CH₂)₂-S-Rf
CH₂=C(-CF₃)-C(=O)-O-(CH₂)₂-S-(CH₂)₂-Rf
CH₂=C(-CF₃)-C(=O)-O-(CH₂)₂-SO₂-Rf
CH₂=C(-CF₃)-C(=O)-O-(CH₂)₂-SO₂-(CH₂)₂-Rf
CH₂=C(-CF₃)-C(=O)-NH-(CH₂)₂-Rf
CH₂=C(-CF₂H)-C(=O)-O-(CH₂)₂-S-Rf
CH₂=C(-CF₂H)-C(=O)-O-(CH₂)₂-S-(CH₂)₂-Rf
CH₂=C(-CF₂H)-C(=O)-O-(CH₂)₂-SO₂-Rf
CH₂=C(-CF₂H)-C(=O)-O-(CH₂)₂-SO₂-(CH₂)₂-Rf
CH₂=C(-CF₂H)-C(=O)-NH-(CH₂)₂-Rf
CH₂=C(-CN)-C(=O)-O-(CH₂)₂-S-Rf
CH₂=C(-CN)-C(=O)-O-(CH₂)₂-S-(CH₂)₂-Rf
CH₂=C(-CN)-C(=O)-O-(CH₂)₂-SO₂-Rf
CH₂=C(-CN)-C(=O)-O-(CH₂)₂-SO₂-(CH₂)₂-Rf
CH₂=C(-CN)-C(=O)-NH-(CH₂)₂-Rf
CH₂=C(-CF₂CF₃)-C(=O)-O-(CH₂)₂-S-Rf
CH₂=C(-CF₂CF₃)-C(=O)-O-(CH₂)₂-S-(CH₂)₂-Rf
CH₂=C(-CF₂CF₃)-C(=O)-O-(CH₂)₂-SO₂-Rf
CH₂=C(-CF₂CF₃)-C(=O)-O-(CH₂)₂-SO₂-(CH₂)₂-Rf
CH₂=C(-CF₂CF₃)-C(=O)-NH-(CH₂)₂-Rf
CH₂=C(-F)-C(=O)-O-(CH₂)₃-S-Rf
CH₂=C(-F)-C(=O)-O-(CH₂)₃-S-(CH₂)₂-Rf
CH₂=C(-F)-C(=O)-O-(CH₂)₃-SO₂-Rf
CH₂=C(-F)-C(=O)-O-(CH₂)₃-SO₂-(CH₂)₂-Rf
CH₂=C(-F)-C(=O)-NH-(CH₂)₃-Rf
CH₂=C(-Cl)-C(=O)-O-(CH₂)₃-S-Rf
CH₂=C(-Cl)-C(=O)-O-(CH₂)₃-S-(CH₂)₂-Rf
CH₂=C(-Cl)-C(=O)-O-(CH₂)₃-SO₂-Rf
CH₂=C(-Cl)-C(=O)-O-(CH₂)₃-SO₂-(CH₂)₂-Rf
CH₂=C(-CF₃)-C(=O)-O-(CH₂)₃-S-Rf
CH₂=C(-CF₃)-C(=O)-O-(CH₂)₃-S-(CH₂)₂-Rf
CH₂=C(-CF₃)-C(=O)-O-(CH₂)₃-SO₂-Rf
CH₂=C(-CF₃)-C(=O)-O-(CH₂)₃-SO₂-(CH₂)₂-Rf
CH₂=C(-CF₂H)-C(=O)-O-(CH₂)₃-S-Rf
CH₂=C(-CF₂H)-C(=O)-O-(CH₂)₃-S-(CH₂)₂-Rf
CH₂=C(-CF₂H)-C(=O)-O-(CH₂)₃-SO₂-Rf
CH₂=C(-CF₂H)-C(=O)-O-(CH₂)₃-SO₂-(CH₂)₂-Rf
CH₂=C(-CN)-C(=O)-O-(CH₂)₃-S-Rf
CH₂=C(-CN)-C(=O)-O-(CH₂)₃-S-(CH₂)₂-Rf
CH₂=C(-CN)-C(=O)-O-(CH₂)₃-SO₂-Rf
CH₂=C(-CN)-C(=O)-O-(CH₂)₃-SO₂-(CH₂)₂-Rf
CH₂=C(-CF₂CF₃)-C(=O)-O-(CH₂)₃-S-Rf
CH₂=C(-CF₂CF3)-C(=O)-O-(CH₂)₃-S-(CH₂)₂-Rf
CH₂=C(-CF₂CF₃)-C(=O)-O-(CH₂)₃-SO₂-Rf
CH₂=C(-CF₂CF₃)-C(=O)-O-(CH₂)₂-SO₂-(CH₂)₂-Rf

The monomer (b) is an acrylamide monomer of the formula: 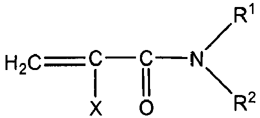
wherein X is H or methyl,
R¹ is H or C₁₋₁₀-alkyl or C₁₋₁₀-alkoxyalkyl, and
R² is C₁₋₁₀-alkyl or C₁₋₁₀-alkoxyalkyl.

With respect to R¹ and R², the alkyl group may be linear or cyclic, and the carbon number of the alkyl group may be 1-10, for example, 1-6, particularly 1-4, especially 2-3. The alkoxyalkyl group may be linear or cyclic, and the carbon number of each of the alkoxy group and the alkyl group may be 1-10, particularly 1-4. Preferably, R¹ is H, R² is alkyl or alkoxyalkyl.

Specific examples of the monomer (b) include N-n-propyl acrylamide, N-n-propyl methacrylamide, N-isopropyl acrylamide, N-isopropyl methacrylamide, N,N-diethyl acrylamide, N-methyl-N-n-propyl acrylamide, N-methyl-N-isopropyl acrylamide, N-tetrahydrofurfuryl acrylamide, N-tetrahydrofurfuryl methacrylamide, N-ethoxypropyl acrylamide, N-ethoxypropyl methacrylamide, N-ethoxyethyl acrylamide, N-1-methyl-2-methoxyethyl acrylamide, N-morphorinopropyl acrylamide, N-methoxypropyl acrylamide, N-methoxypropyl methacrylamide, N-isopropoxypropyl acrylamide, N-isopropoxypropyl methacrylamide, N-isopropoxyethyl acrylamide and N-isopropoxyethyl methacrylamide.

The fluorine-containing polymer comprises (c) a fluorine-free crosslinkable monomer other than the monomers (a) and (b).

The fluorine-free crosslinkable monomer is a fluorine-free monomer having at least two reactive groups and/or carbon-carbon double bonds. The crosslinkable monomer may be a compound having at least two carbon-carbon double bonds, or a compound having at least one carbon-carbon double bond and at least one reactive group. Examples of the reactive group include a hydroxyl group, an epoxy group, a chloromethyl group, a blocked isocyanate group and a carboxyl group.

Examples of the crosslinkable monomer include diacetone(meth)acrylamide, N-methylol (meth)acrylamide, hydroxymethyl (meth)acrylate, hydroxyethyl (meth)acrylate, 3-chloro-2-hydroxypropyl (meth)acrylate, butadiene, chloroprene and glycidyl (meth)acrylate, to which the crosslinkable monomer is not limited.

Other examples of the crosslinkable monomer include glycerol (meth)acrylate, acetoacetoxyethyl (meth)acrylate, isocyanate group-containing (meth)acrylates such as 2-isocyanatoethyl (meth)acrylate, and these (meth)acrylates having an isocyanate group blocked with a blocking agent such as methyl ethyl ketoxime.

The fluorine-containing polymer contains 100 parts by weight (pbw) of the fluorine-containing monomer (a). The amount of the acrylamide monomer (b) is 0.1-20 pbw, for example 0.1-5 pbw, particularly 0.5-2 pbw, and the amount of other monomer (c) is 0-70 pbw, for example 20-50 pbw, particularly 30-40 pbw, based on 100 pbw of fluorine-containing monomer (a). The amount of the crosslinkable monomer is at most 30 pbw, for example 0.1-20 pbw, particularly 0.5-10 pbw, based on 100 pbw of fluorine-containing monomer (a).

The weight-average molecular weight of the fluorine-containing polymer of the present invention may be 1,000-1,000,000, preferably 5,000-500,000. The weight-average molecular weight is measured by a gel permeation chromatography in terms of polystyrene.

A polymerization method of producing the polymer of the present invention is not limited. Various polymerization methods such as a bulk polymerization, a solution polymerization, an emulsion polymerization and a radiation polymerization can be selected. For example, a solution polymerization using an organic solvent and an emulsion polymerization using water alone or both an organic solvent and water are generally selected. A treatment liquid can be produced by diluting a reaction mixture with water after the polymerization or by adding an emulsifier to make the emulsification in water.

Examples of the organic solvent include ketones such as acetone and methyl ethyl ketone; esters such as ethyl acetate and methyl acetate; glycols such as propylene glycol, dipropylene glycol monomethyl ether, dipropylene glycol, tripropylene glycol and polyethylene glycol preferably having low-molecular weight; and alcohols such as ethyl alcohol and isopropanol.

Various emulsifiers such as conventional anionic, cationic or nonionic emulsifiers can be used as the emulsifier added for the emulsion polymerization or added after the polymerization for giving an emulsion in water.

A polymerization initiator such as a peroxide compound, an azo compound and a persulfate compound can be used. Generally, the polymerization initiator is water-soluble and/or oil-soluble.

Preferred specific example of the oil-soluble polymerization initiator include 2,2'-azobis(2-methyl propionitrile), 2,2'-azobis(2-methyl butyronitrile), 2,2'-azobis(2,4-dimethyl valeronitrile), 2,2'-azobis(2,4-dimethyl-4-methoxyvaleronitrile), 1,1'-azobis(cyclohexane-1-carbonitrile), dimethyl-2,2'-azobis(2-methyl propionate), 2,2'-azobis(2-isobutyronitrile), benzoyl peroxide, ditert.-butyl peroxide, lauryl peroxide, cumene hydroperoxide, t-butyl peroxypivalate, diisopropyl peroxydicarbonate, and t-butyl perpivalate.

In addition, preferred specific examples of the water-soluble polymerization initiator include 2,2'-azobisisobutylamidine dihydrochloride, 2,2'-azobis(2-methylpropionamidine) hydrochloride, 2,2'-azobis[2-(2-imidazolin-2-yl)-propane] hydrochloride, 2,2'-azobis[2-(2-imidazolin-2-yl) propane] sulfate salt hydrate, 2,2'-azobis[2-(5-methyl-2-imidazolin-2-yl)propane] hydrochloride, potassium persulfate, barium persulfate, ammonium persulfate and hydrogen peroxide.

The polymerization initiator may be used in an amount of 0.01-5 pbw, based on 100 pbw of the monomers.

In the present invention, the chain transfer agent such as a mercapto group-containing compound may be used for the purpose of controlling the molecular weight. Specific examples of the chain transfer agent include 2-mercapto ethanol, thiopropionic acid and an alkyl mercaptan. The amount of the mercapto group-containing compound may be at most 8 pbw, for example 0.01-5 pbw, based on 100 pbw of the monomer.

Specifically, the fluorine-containing polymer can be prepared as follows:
In a solution polymerization, there can be used a method of dissolving the monomer(s) into an organic solvent in the presence of a polymerization initiator, replacing the atmosphere by nitrogen, and stirring the mixture with heating at a temperature of 50-120°C for 1-10 hours. Generally a polymerization initiator may be an oil-soluble polymerization initiator. The organic solvent is inert to the monomer and can solubilize the monomer. Examples of the organic solvent include ketones such as acetone and methyl ethyl ketone; esters such as ethyl acetate and methyl acetate; glycols such as propylene glycol, dipropylene glycol monomethyl ether, dipropylene glycol, tripropylene glycol and polyethylene glycol preferably having low-molecular weight; and alcohols such as ethyl alcohol and isopropanol.

The organic solvent may be used in an amount of 50-1,000 pbw, based on 100 pbw of total of the monomers.

In an emulsion polymerization, there can be used a method of emulsifying monomers in water in the presence of a polymerization initiator, an emulsifier and the chain transfer agent, replacing the atmosphere by nitrogen, and polymerizing with stirring, for example, at a temperature of 50-80°C for 1-10 hours. The polymerization initiator may be water-soluble polymerization initiator and/or an oil-soluble polymerization initiator.

In order to obtain a polymer dispersion in water, which is superior in storage stability, it is desirable that the monomers are finely emulsified in water by using an emulsifier capable of applying a strong shear energy (e.g., a high-pressure homogenizer and an ultrasonic homogenizer) and then polymerized with using the water-soluble polymerization initiator. As the emulsifier, various emulsifiers such as an anionic emulsifier, a cationic emulsifier and a nonionic emulsifier can be used in the amount within the range from 0.5 to 10 parts by weight, based on 100 parts by weight of the monomers. When the monomers are not completely compatibilized, a compatibilizing agent (e.g., a water-soluble organic solvent and a low-molecular weight monomer) capable of sufficiently compatibilizing them is preferably added to these monomers. By the addition of the compatibilizing agent, the emulsifiability and copolymerizability can be improved.

Examples of the water-soluble organic solvent include acetone, methyl ethyl ketone, ethyl acetate, propylene glycol, dipropylene glycol monomethyl ether, dipropylene glycol, tripropylene glycol and ethanol. The water-soluble organic solvent may be used in an amount of 1-80 pbw, e.g. 5-50 pbw, based on 100 pbw of water.

The thus obtained polymer can be diluted or dispersed with water or an organic solvent if necessary, and then prepared in an arbitrary form such as an emulsion, a solution in an organic solvent and an aerosol to give the water- and oil-repellent agent. The polymer functions as an effective component (an active ingredient) of the water- and oil-repellent agent. The water- and oil-repellent agent comprises the fluorine-containing polymer and a medium (particularly a liquid medium) (for example, an organic solvent and/or water). The concentration of the fluorine-containing polymer in the water- and oil-repellent agent may be, for example, 0.01-50 wt.-%, based on the water- and oil-repellent agent.

The water- and oil-repellent agent of the present invention preferably comprises the fluorine-containing polymer and an aqueous medium. In the present specification, the "aqueous medium" includes a medium consisting of water and a medium containing an organic solvent in addition to water (The amount of the organic solvent may be at most 80 pbw, particularly 0.1-50 pbw, particularly 5-30 pbw, based on 100 pbw of water.).

The polymer of the present invention can be applied to the article to be treated, as the water- and oil-repellent agent by an arbitrary method, depending on a type of the treated article or a preparation form (such as an emulsion, an organic solvent solution and an aerosol). For example, when the water- and oil-repellent agent is the aqueous emulsion and the organic solvent solution, the water- and oil-repellent agent is adhered to surfaces of the substrate by a well-known procedure such as an immersion coating and a spray coating, and is dried. If necessary, a heat treatment such as curing may be conducted.

If necessary, blenders (that is, additives) may be used in addition to the water- and oil-repellent agent of the present invention. Examples of the blenders include other surface water- and oil-repellent agents, anti-wrinkle agents, anti-shrink agents, flame retardants, crosslinking agents, antistatic agents, softeners, water-soluble polymers such as polyethylene glycol and polyvinyl alcohol, wax emulsions, mothproofing agents, antimicrobial agents, pigments and paints. These blenders may be used by adding to a treatment bath when the article to be treated is treated, or, if possible, these blenders may be mixed with the polymer of the present invention beforehand.

The substrate to be treated with the water- and oil-repellent agent of the present invention is not limited and examples thereof include a textile, masonry, a filter (for example, an electrostatic filter), a dust protective mask, glass, paper, wood, leather, fur, asbestos, brick, cement, metal and oxide, ceramics, plastics, a coated surface and a plaster. The textile is particularly useful. The textile has various examples. Examples of the textile include animal- or vegetable-origin natural fibers such as cotton, hemp, wool and silk; synthetic fibers such as polyamide, polyester, polyvinyl alcohol, polyacrylonitrile, polyvinyl chloride and polypropylene; semi-synthetic fibers such as rayon and acetate; inorganic fibers such as glass fiber, carbon fiber and asbestos fiber; and a mixture of these fibers. The textile may be in any form such as a fiber, yarn and a fabric.

In the present invention, the substrate is treated with the water- and oil-repellent agent. The "treatment" means that the water- and oil-repellent agent is applied to the substrate by immersion, spraying, coating or the like. The treatment gives the result that the fluorine-containing polymer which is an active component of the water- and oil-repellent agent is penetrated into the internal parts of the substrate and/or adhered to surfaces of the substrate.

The substrate which has been treated with the water- and oil-repellent agent can be coated with various resins (for example, a polyurethane resin and an acrylic resin). Examples of the resin forming the coating include a polyurethane resin and an acrylic resin. The thickness of the coating is generally 0.1-1,000 *µ*m, for example 1-500 *µ*m. In the present invention, the coating has high strength of adhering to the substrate to be treated.

### EXAMPLES

The following Examples further illustrate the present invention in detail but are not to be construed to limit the scope thereof.

In the followings, parts or % is parts by weight (pbw) or wt.-%, unless otherwise specified.

The procedures of the tests are as follows:

### Peel Strength Test:

A fabric treated with a repellent agent is coated with a polyurethane resin. The polyurethane resin is Resamin ME-3612LP (manufactured by Dainichiseika Color & Chemicals Mfg. Co., Ltd.) diluted to 80% with ethyl acetate. A hot melt tape (MELCO Tape (2.5×100mm) manufactured by San Chemicals Ltd.) is adhered to a coated portion by an iron at 160°C for 15 seconds and stood for at least one hour. Thereafter, ends of the fabric and the hot-melt tape are pulled by Tensilon (AGS-H 500N manufactured by Shimadzu). A load at which the peeling-off occurs is taken as a peel strength. A pull rate is 50 mm/min.

### Water Pressure Resistance Test:

According to AATCC 127-2003 water pressure resistance test, a water pressure resistance is measured by a water pressure resistance measurement apparatus.

### Wash Durability of Water Pressure Resistance

Wash according to JIS L-0217-103 method is repeatedly conducted once (HL-1), five times (HL-5), ten times (HL-10), and then a water pressure resistance property is evaluated.

### Preparative Example 1

CF₃CF₂(CF₂CF₂)ₙCH₂CH₂COOCH=CH₂ (a mixture of compounds wherein n is 3, 4 and 5; average of n is 3.1) (167 g), stearyl acrylate (12 g), 2-ethylhexyl acrylate (0.9 g), N-isopropyl acrylamide (1.2 g), 3-chloro-2-hydroxypropyl methacrylate (1.3 g), polyoxyethylenealkyl ether (21 g), tripropylene glycol (69 g) and deionized water (105 g) were mixed to give a mixture. The mixture was heated to 60°C and emulsified by a high pressure homogenizer. The resultant emulsion liquid was charged into a 1 L autoclave, and nitrogen was replaced to remove the dissolved oxygen. Next, vinyl chloride (82 g) was injected and 2,2'-azobis(2-amidinopropane) dihydrochloride (1.7 g) was charged. The copolymerization was conducted at 60°C for three hours with stirring to give a copolymer emulsion. This emulsion was diluted with deionized water to give a fluorine-containing acrylic water- and oil-repellent agent (aqueous composition) having a solid content of 30% by weight. The composition of the resultant polymer was almost the same as the formulations of charged monomers.

### Comparative Preparative Example 1

CF₃CF₂(CF₂CF₂)ₙCH₂CH₂COOCH=CH₂ (a mixture of compounds wherein n is 3, 4 and 5; average of n is 3.1) (167 g), stearyl acrylate (12 g), 2-ethylhexyl acrylate (0.9 g), N-isopropyl acrylamide (1.2 g), polyoxyethylenealkyl ether (21 g), tripropylene glycol (69 g) and deionized water (105 g) were mixed to give a mixture. The mixture was heated to 60°C and emulsified by a high pressure homogenizer. The resultant emulsion liquid was charged into a 1 L autoclave, and nitrogen was replaced to remove the dissolved oxygen. Next, vinyl chloride (82 g) was injected and 2,2'-azobis(2-amidinopropane) dihydrochloride (1.7 g) was charged. The copolymerization was conducted at 60°C for three hours with stirring to give a copolymer emulsion. This emulsion was diluted with deionized water to give a fluorine-containing acrylic water- and oil-repellent agent (aqueous composition) having a solid content of 30% by weight. The composition of the resultant polymer was almost the same as the formulations of charged monomers.

### Comparative Preparative Example 2

CF₃CF₂(CF₂CF₂)ₙCH₂CH₂COOCH=CH₂ (a mixture of compounds wherein n is 3, 4 and 5; average of n is 3.1) (167 g), stearyl acrylate (12 g), 2-ethylhexyl acrylate (0.9 g), polyoxyethylenealkyl ether (21 g), tripropylene glycol (69 g) and deionized water (105 g) were mixed to give a mixture. The mixture was heated to 60°C and emulsified by a high pressure homogenizer. The resultant emulsion liquid was charged into a 1 L autoclave, and nitrogen was replaced to remove the dissolved oxygen. Next, vinyl chloride (82 g) was injected and 2,2'-azobis(2-amidinopropane) dihydrochloride (1.7 g) was charged. The copolymerization was conducted at 60°C for three hours with stirring to give a copolymer emulsion. This emulsion was diluted with deionized water to give a fluorine-containing acrylic water- and oil-repellent agent (aqueous composition) having a solid content of 30% by weight. The composition of the resultant polymer was almost the same as the formulations of charged monomers.

### Example 1

The fluorine-containing acrylic water- and oil-repellent agent (3.0 g) prepared by Preparative Example 1 was diluted with pure water to give a test liquid (100 g). Four sheets of a polyester test fabric (510 mm × 205 mm) were immersed in this test liquid, was passed through a mangle, and treated at 160°C for 2 minutes in a pin tenter. Then the water pressure resistance test was conducted after unwashed or washed once, five times or ten times. The results are shown in Table 1.

### Comparative Example 1

The fluorine-containing acrylic water- and oil-repellent agent prepared by Comparative Preparative Example 1 was subjected to the treatment, the washing and the water pressure resistance test, as in Example 1. The results are shown in Table 1.

### Example 2

The fluorine-containing acrylic water- and oil-repellent agent (3.0 g) prepared by Preparative Example 1 was diluted with pure water to give a test liquid (100 g). An awning test fabric of polyacrylonitrile (510 mm × 205 mm) was immersed in this test liquid, was passed through a mangle, and treated at 150°C for 3 minutes in a pin tenter. Then the water pressure resistance test was conducted. The results are shown in Table 2.

### Comparative Example 2

The fluorine-containing acrylic water- and oil-repellent agent prepared by Comparative Preparative Example 1 was subjected to the treatment, the washing and the water pressure resistance test, as in Example 2. The results are shown in Table 2.

### Comparative Example 3

Each of the fluorine-containing acrylic water- and oil-repellent agent (1.26 g) prepared by Preparative Example 1, a melamine resin (Sumitex Resin M-3 manufactured by Sumitomo Chemical Co. Ltd.) (3.24 g) and Sumitex Accelerator ACX (manufactured by Sumitomo Chemical Co. Ltd.) (1.37 g) and acetic acid (0.2 g) was diluted with pure water to give a test liquid (100 g). An awning test fabric of polyacrylonitrile (510 mm × 205 mm) was immersed in this test liquid, was passed through a mangle, and treated at 150°C for 3 minutes in a pin tenter. Then the water pressure resistance test was conducted. The results are shown in Table 3.

### Comparative Example 4

The fluorine-containing acrylic water- and oil-repellent agent prepared by Comparative Preparative Example 1 was subjected to the treatment, the washing and the water pressure resistance test, as in Example 5. The results are shown in Table 3.

### Example 4

The fluorine-containing acrylic water- and oil-repellent agent (1.26 g) prepared by Preparative Example 1 was diluted with pure water to give a test liquid (100 g). A polyester non-woven fabric (510 mm × 205 mm) was immersed in this test liquid, was passed through a mangle, and treated at 160°C for 30 seconds in a pin tenter. Then the water pressure resistance test was conducted. The results are shown in Table 4.

### Comparative Example 5

The fluorine-containing acrylic water- and oil-repellent agent prepared by Comparative Preparative Example 1 was subjected to the treatment, the washing and the water pressure resistance test, as in Example 4. The results are shown in Table 4.

### Example 5

The fluorine-containing acrylic water- and oil-repellent agent (2.0 g) prepared by Preparative Example 1 was diluted with pure water to give a test liquid (100 g). A polyester test fabric (510 mm × 205 mm) was immersed in this test liquid, was passed through a mangle, and treated at 170°C for 1 minute in a pin tenter. Then the peel strength test was conducted. The results are shown in Table 5.

### Comparative Example 6

The fluorine-containing acrylic water- and oil-repellent agent prepared by Comparative Preparative Example 1 was subjected to the treatment, the washing and the peel strength test, as in Example 5. The results are shown in Table 5.

### Example 6

The fluorine-containing acrylic water- and oil-repellent agent (2.0 g) prepared by Preparative Example 1 was diluted with pure water to give a test liquid (100 g). A nylon test fabric (510 mm × 205 mm) was immersed in this test liquid, was passed through a mangle, and treated at 170°C for 1 minute in a pin tenter. Then the peel strength test was conducted. The results are shown in Table 6.

### Comparative Example 7

The fluorine-containing acrylic water- and oil-repellent agent prepared by Comparative Preparative Example 1 was subjected to the treatment, the washing and the peel strength test, as in Example 6. The results are shown in Table 6.

### Comparative Example 8

The fluorine-containing acrylic water- and oil-repellent agent prepared by Comparative Preparative Example 2 was subjected to the treatment, the washing and the water pressure resistance test, as in Example 1. The results are shown in Table 1.

### Comparative Example 9

The fluorine-containing acrylic water- and oil-repellent agent prepared by Comparative Preparative Example 2 was subjected to the treatment, the washing and the water pressure resistance test, as in Example 2. The results are shown in Table 2.

### Comparative Example 10

The fluorine-containing acrylic water- and oil-repellent agent prepared by Comparative Preparative Example 2 was subjected to the treatment, the washing and the water pressure resistance test, as in Comparative Example 3. The results are shown in Table 3.

### Comparative Example 11

The fluorine-containing acrylic water- and oil-repellent agent prepared by Comparative Preparative Example 2 was subjected to the treatment, the washing and the water pressure resistance test, as in Example 4. The results are shown in Table 4.

### Comparative Example 12

The fluorine-containing acrylic water- and oil-repellent agent prepared by Comparative Preparative Example 2 was subjected to the treatment, the washing and the peel strength test, as in Example 5. The results are shown in Table 5.

### Comparative Example 13

The fluorine-containing acrylic water- and oil-repellent agent prepared by Comparative Preparative Example 2 was subjected to the treatment, the washing and the peel strength test, as in Example 6. The results are shown in Table 6.

**Table 1**

| | Water pressure resistance (mm) | | | |
|---|---|---|---|---|
| | HL0 | HL1 | HL5 | HL10 |
| Example 1 | 45.5 | 50.3 | 50.1 | 52.8 |
| Comparative Example 1 | 41.8 | 47.0 | 47.5 | 48.8 |
| Comparative Example 8 | 38.0 | 45.3 | 41.8 | 44.0 |

| | | | | |
|---|---|---|---|---|
| HL-0: Unwashed HL-1: After washed once HL-5: After washed five times HL-10: After washed ten times | | | | |

**Table 2**

| | Water pressure resistance (mm) |
|---|---|
| Example 2 | 33.5 |
| Comparative Example 2 | 34.7 |
| Comparative Example 9 | 31.7 |

**Table 3**

| | Water pressure resistance (mm) |
|---|---|
| Comparative Example 3 | 39.8 |
| Comparative Example 4 | 39.5 |
| Comparative Example 3 | 38.2 |

**Table 4**

| | Water pressure resistance (mm) |
|---|---|
| Example 4 | 13.5 |
| Comparative Example 5 | 13.3 |
| Comparative Example 11 | 12.3 |

**Table 5**

| | Peel strength (g/cm) |
|---|---|
| Example 5 | 680 |
| Comparative Example 6 | 883 |
| Comparative Example 12 | 565 |

**Table 6**

| | Peel strength (g/cm) |
|---|---|
| Example 6 | 1600 |
| Comparative Example 7 | 1435 |
| Comparative Example 13 | 1335 |

## Claims

1. A polymer, which is a fluorine-containing polymer comprising:
(a) a fluorine-containing monomer,
(b) an acrylamide monomer of the formula: 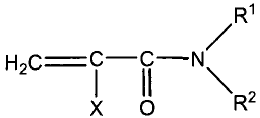 wherein
X is H or methyl,
R¹ is H, C₁₋₁₀-alkyl or C₁₋₁₀-alkoxyalkyl, and
R² is C₁₋₁₀-alkyl or C₁₋₁₀-alkoxyalkyl, and
(c) a fluorine-free crosslinkable monomer having at least two reactive groups and/or carbon-carbon double bonds, wherein the reactive group is at least one selected from hydroxyl, epoxy, chloromethyl, blocked isocyanate, acetoacetoxy and carboxyl.

2. The polymer of claim 1, wherein the fluorine-containing monomer (a) is a fluorine-containing acrylate.

3. The polymer of claim 2, wherein the fluorine-containing acrylate ester is of the general formula:
CH₂=C(-X)-C(=O)-Y-Z-Rf (1)
wherein
X is H, linear or branched C₁₋₂₁-alkyl, F, Cl, Br, I, CFX¹X² (wherein X¹ and X² is H, F, Cl, Br or I), cyano, linear or branched C₁₋₂₁-fluoroalkyl, or a substituted or unsubstituted benzyl or phenyl group;
Y is -O- or -NH-;
Z is a C₁₋₁₀-aliphatic group, a C₆₋₁₈-aromatic or C₆₋₁₈-cycloaliphatic group, -CH₂CH₂N(R¹)SO₂- (wherein R¹ is C₁₋₄-alkyl), -CH₂CH(OZ¹)CH₂- (wherein Z¹ is H or acetyl), or -(CH₂)ₘ-SO₂-(CH₂)ₙ- or -(CH₂)ₘ-S-(CH₂)ₙ- wherein m is 1-10 and n is 0-10; and
Rf is linear or branched C₁₋₂₁-fluoroalkyl.

4. The polymer of any of claims 1-3, wherein the acrylamide monomer is at least one selected from N-n-propyl acrylamide, N-n-propyl methacrylamide, N-isopropyl acrylamide, N-isopropyl methacrylamide, N,N-diethyl acrylamide, N-methyl-N-n-propyl acrylamide, N-methyl-N-isopropyl acrylamide, N-tetrahydrofurfuryl acrylamide, N-tetrahydrofurfuryl methacrylamide, N-ethoxypropyl acrylamide, N-ethoxypropyl methacrylamide, N-ethoxyethyl acrylamide, N-1-methyl-2-methoxyethyl acrylamide, N-morpholino propyl acrylamide, N-methoxy propyl acrylamide, N-methoxy propyl methacrylamide, N-isopropoxypropyl acrylamide, N-isopropoxypropyl methacrylamide, N-isopropoxyethyl acrylamide and N-isopropoxyethyl methacrylamide.

5. The polymer of claim 1, wherein the crosslinkable monomer (c) is at least one selected from diacetone(meth)acrylamide, N-methylol(meth)acrylamide, hydroxymethyl(meth)acrylate, hydroxyethyl (meth)acrylate, 3-chloro-2-hydroxypropyl (meth)acrylate, butadiene, chloroprene, glycidyl(meth)acrylate, glycerol (meth)acrylate, acetoacetoxyethyl(meth)acrylate, isocyanate group-containing (meth)acrylates, and these (meth)acrylates having an isocyanate group blocked with a blocking agent.

6. A water- and oil-repellent agent comprising the polymer of any of claims 1-5.

7. The water- and oil-repellent agent of claim 6, which further contains an aqueous medium.

8. A method of treating a substrate, which comprises treating the substrate with the water- and oil-repellent agent of claim 6.

9. A textile which is treated with the water- and oil-repellent agent of claim 6.

## Patentansprüche

1. Polymer, das ein fluorhaltiges Polymer ist, umfassend:
(a) ein fluorhaltiges Monomer,
(b) ein Acrylamidmonomer der Formel: 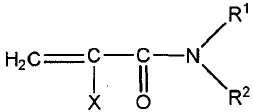 worin:
X H oder Methyl ist,
R¹ H, C₁₋₁₀-Alkyl oder C₁₋₁₀-Alkoxyalkyl ist, und
R² C₁₋₁₀-Alkyl oder C₁₋₁₀-Alkoxyalkyl ist, und
(c) ein fluorfreies vernetzbares Monomer mit zumindest zwei reaktiven Gruppen und/oder Kohlenstoff-Kohlenstoff-Doppelbindungen, wobei die reaktive Gruppe zumindest eine, ausgewählt aus Hydroxyl, Epoxy, Chlormethyl, blockiertem Isocyanat, Acetoacetoxy und Carboxyl, ist.

2. Polymer gemäss Anspruch 1, wobei das fluorhaltige Monomer (a) ein fluorhaltiges Acrylat ist.

3. Polymer gemäss Anspruch 2, wobei der fluorhaltige Acrylatester die allgemeine Formel hat:
CH₂=C(-X)-C(=O)-Y-Z-Rf (1)
worin
X H, geradkettiges oder verzweigtes C₁₋₂₁-Alkyl, F, Cl, Br, I, CFX¹X² (worin X¹ und X² H, F, Cl, Br oder I sind), Cyano, geradkettiges oder verzweigtes C₁₋₂₁-Fluoralkyl oder eine substituierte oder unsubstituierte Benzyl- oder Phenylgruppe ist;
Y -O- oder -NH- ist;
Z eine aliphatische C₁₋₁₀-Gruppe, eine aromatische C₆₋₁₈- oder eine cycloaliphatische C₆₋₁₈-Gruppe, -CH₂CH₂N(R¹)SO₂- (worin R¹ C₁₋₄-Alkyl ist), -CH₂CH(OZ¹)CH₂- (worin Z¹ H oder Acetyl ist) oder -(CH₂)ₘ-SO₂-(CH₂)ₙ- oder -(CH₂)ₘ-S-(CH₂)ₙ-, worin m 1 bis 10 ist und n 0 bis 10 ist, ist; und
Rf geradkettiges oder verzweigtes C₁₋₂₁-Fluoralkyl ist.

4. Polymer gemäss einem der Ansprüche 1 bis 3, wobei das Acrylamidmonomer zumindest eines, ausgewählt aus N-n-Propylacrylamid, N-n-Propylmethacrylamid, N-Isopropylacrylamid, N-Isopropylmethacrylamid, N,N-Diethylacrylamid, N-Methyl-N-n-propylacrylamid, N-Methyl-N-isopropylacrylamid, N-Tetrahydrofurfurylacrylamid, N-Tetrahydrofurfurylmethacrylamid, N-Ethoxypropylacrylamid, N-Ethoxypropylmethacrylamid, N-Ethoxyethylacrylamid, N-1-Methyl-2-methoxyethylacrylamid, N-Morpholinopropylacrylamid, N-Methoxypropylacrylamid, N-Methoxypropylmethacrylamid, N-Isopropoxypropylacrylamid, N-Isopropoxypropylmethacrylamid, N-Isopropoxyethylacrylamid und N-Isopropoxyethylmethacrylamid, ist.

5. Polymer gemäss Anspruch 1, wobei das vernetzbare Monomer (c) zumindest eines, ausgewählt aus Diaceton(meth)acrylamid, N-Methylol(meth)acrylamid, Hydroxymethyl(meth)acrylat, Hydroxyethyl(meth)acrylat, 3-Chlor-2-hydroxypropyl(meth)acrylat, Butadien, Chloropren, Glycidyl(meth)acrylat, Glycerin(meth)acrylat, Acetoacetoxyethyl(meth)acrylat und eine Isocyanatgruppe enthaltenden (Meth)acrylaten, ist und diese (Meth)acrylate eine Isocyanatgruppe aufweisen, die mit einem Blockierungsmittel blockiert ist.

6. Wasser- und ölabweisendes Mittel, umfassend ein Polymer gemäss einem der Ansprüche 1 bis 5.

7. Wasser- und ölabweisendes Mittel gemäss Anspruch 6, das ferner ein wässriges Medium enthält.

8. Verfahren zur Behandlung eines Substrats, das die Behandlung des Substrats mit einem wasser- und ölabweisenden Mittel gemäss Anspruch 6 umfasst.

9. Textil, das mit einem wasser- und ölabweisenden Mittel gemäss Anspruch 6 behandelt ist.

## Revendications

1. Polymère, lequel est un polymère contenant du fluor comprenant :
(a) un monomère contenant du fluor,
(b) un monomère d'acrylamide de la formule : 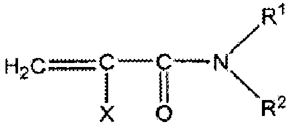 où
X est H ou le groupe méthyle,
R¹ est H, un groupe alkyle en C₁₋₁₀ ou alcoxyalkyle en C₁₋₁₀, et
R² est un groupe alkyle en C₁₋₁₀ ou alcoxyalkyle en C₁₋₁₀, et
(c) un monomère réticulable exempt de fluor présentant au moins deux groupes réactifs et/ou des doubles liaisons carbone-carbone, dans lequel le groupe réactif est au moins un choisi parmi un groupe hydroxyle, époxy, chlorométhyle, isocyanate bloqué, acétoacétoxy et carboxyle.

2. Polymère selon la revendication 1, dans lequel le monomère contenant du fluor (a) est un acrylate contenant du fluor.

3. Polymère selon la revendication 2, dans lequel l'ester d'acrylate contenant du fluor est de la formule générale :
CH₂=C(-X)-C(=O)-Y-Z-Rf (1)
où
X est H, un groupe alkyle en C₁₋₂₁ linéaire ou ramifié, F, Cl, Br, I, CFX¹X² (où X¹ et X² sont H, F, Cl, Br ou I), cyano, fluoroalkyle en C₁₋₂₁ linéaire ou ramifié, ou un groupe benzyle ou phényle substitué ou non substitué ;
Y est -0- ou -NH- ;
Z est un groupe aliphatique en C₁₋₁₀, un groupe aromatique en C₆₋₁₈ ou cycloaliphatique en C₆₋₁₈, -CH₂CH₂N(R¹)SO₂- (où R¹ est un groupe alkyle en C₁₋₄), -CH₂CH(OZ¹)CH₂- (où Z¹ est H ou un groupe acétyle), ou -(CH₂)ₘ-SO₂-(CH₂)ₙ- ou -(CH₂)ₘ-S-(CH₂)ₙ- où m est 1-10 et n est 0-10 ; et
Rf est un groupe fluoroalkyle en C₁₋₂₁ linéaire ou ramifié.

4. Polymère selon l'une quelconque des revendications 1-3, dans lequel le monomère d'acrylamide est au moins un choisi parmi l'acrylamide de N-n-propyle, le méthacrylamide de N-n-propyle, l'acrylamide de N-isopropyle, le méthacrylamide de N-isopropyle, l'acrylamide de N,N-diéthyle, l'acrylamide de N-méthyl-N-n-propyle, l'acrylamide de N-méthyl-N-isopropyle, l'acrylamide de N-tétrahydrofurfuryle, le méthacrylamide de N-tétrahydrofurfuryle, l'acrylamide de N-éthoxypropyle, le méthacrylamide de N-éthoxypropyle, l'acrylamide de N-éthoxyéthyle, l'acrylamide de N-1-méthyl-2-méthoxyéthyle, l'acrylamide de N-morpholinopropyle, l'acrylamide de N-méthoxypropyle, le méthacrylamide de N-méthoxypropyle, l'acrylamide de N-isopropoxypropyle, le méthacrylamide de N-isopropoxypropyle, l'acrylamide de N-isopropoxyéthyle et le méthacrylamide de N-isopropoxyéthyle.

5. Polymère selon la revendication 1, dans lequel le monomère réticulable (c) est au moins un choisi parmi le (méth)acrylamide de diacétone, le (méth)acrylamide de N-méthylol, le (méth)acrylate d'hydroxyméthyle, le (méth)acrylate d'hydroxyéthyle, le (méth)acrylate de 3-chloro-2-hydroxypropyle, le butadiène, le chloroprène, le (méth)acrylate de glycidyle, le (méth)acrylate de glycérol, le (méth)acrylate d'acétoacétoxyéthyle, des (méth)acrylates contenant un groupe isocyanate, et ces (méth)acrylates présentant un groupe isocyanate bloqué avec un agent bloquant.

6. Agent repoussant l'eau et l'huile comprenant le polymère selon l'une quelconque des revendications 1-5.

7. Agent repoussant l'eau et l'huile selon la revendication 6, lequel contient de plus un milieu aqueux.

8. Procédé de traitement d'un substrat, lequel comprend le traitement du substrat avec l'agent repoussant l'eau et l'huile selon la revendication 6.

9. Textile qui est traité avec l'agent repoussant l'eau et l'huile selon la revendication 6.
